(19) Europäisches Patentamt
European Patent Office
Office européen des brevets

(11) Publication number: 0 550 092 A1

(12) # EUROPEAN PATENT APPLICATION

(21) Application number: 92203922.7

(51) Int. Cl.[5]: G11B 5/702

(22) Date of filing: 15.12.92

(30) Priority: 23.12.91 US 812263

(43) Date of publication of application: 07.07.93 Bulletin 93/27

(84) Designated Contracting States: DE FR GB

(71) Applicant: EASTMAN KODAK COMPANY
343 State Street
Rochester, New York 14650-2201(US)

(72) Inventor: Wagstrom-Arnone, Robin Denise, c/o Eastman Kodak
Company, Patent Department, 343 State Street
Rochester, New York 14650-2201(US)
Inventor: James, Robert Owen, c/o Eastman Kodak
Company, Patent Department, 343 State Street
Rochester, New York 14650-2201(US)
Inventor: Yudelson, Joseph Samuel, c/o Eastman Kodak
Company, Patent Department, 343 State Street
Rochester, New York 14650-2201(US)

(74) Representative: Nunney, Ronald Frederick Adolphe et al
Kodak Limited Patent Department Headstone Drive
Harrow Middlesex HA1 4TY (GB)

(54) **Improved durability of magnetic media.**

(57) A polyurethane binder cross-linked with polyisocyanate and polyaziridine is disclosed which is suitable for use in magnetic recording media. The binder demonstrates improved durability.

EP 0 550 092 A1

This invention relates generally to magnetic recording media and more particularly to improving the durability of such media.

Durability is an important consideration in the manufacture of magnetic recording tapes and disks because they must withstand use with various tape and disk drives and magnetic recording heads. As used herein, "durability" defines the length of time a given tape can operate before failure.

In order to achieve good durability of magnetic tapes and disks, it is necessary to include in the magnetic formulation a binder along with a suitable cross-linking agent so that the binder will become insoluble and hard after it has been coated on a substrate and dried. However, durability is not determined simply by the hardness or softness of the binder. "Hardness" as used herein refers to resistance to tearing force and rigidness of the polymer layer. Durability of magnetic tapes involves resistance to abrasion as well as a measure of flexibility in conforming to the magnetic head. Thus, polymers that are "hard" may or may not make durable tapes, depending on whether other features such as the required flexibility are also present. Indeed, both very hard and very soft binders have been known to wear poorly, and the optimum hardness of the binder varies with the type of application. For example, excessive hardness (as distinct from durability) can shorten the useful life of magnetic recording heads and impair their performance. On the other hand, excessive softness can cause excessive wear on the media and degrade magnetic performance.

The factors that may cause one tape to outwear (that is to be more "durable" than) another in a given application are so complex that it is very difficult to determine probable tape life by means other than an actual use test, such as the Steinberg test. See *Magnetic Recording in Science and Industry*, C.B. Pear Jnr., editor, (Rheinhold Publishing Corp., N.Y. (1967) at 101-103).

The hardening process that is used in virtually all magnetic tapes and disks containing an organic medium is based on the reaction of isocyanate (-NCO) groups and hydroxyl (-OH) groups to form urethane (-NHCOO-) bonds. The hardening (crosslinking) agents in this process are polyisocyanates and the widely used types called Mondur™ (Mobay) contain three (-NCO) group per molecule.

Another cross-linking agent that is used in a wide variety of applications is the aziridinyl azines which contain greater than two aziridinyl groups per molecule. The aziridinyl groups react with carboxyl groups (-COOH) to form amide ($-CONH_2$) groups.

The particular advantage of aziridines in coatings is improved adhesion and solvent resistance. However, few have achieved substantial commercial status as components in the coatings art except those which use the carboxyl-aziridine reaction to provide improved adhesion. Paint compositions, for example, have been formulated from a reaction product of a hydrocarbon isocyanate with ethyleneimine (US-A-2,886,455, for example).

The problem is that the durability of magnetic tapes and disks that can be achieved by the above-mentioned cross-linking reactions, that is with isocyanate groups **or** with aziridinyl groups, is generally less than desired. It would therefore be highly desirable to provide a simple method to increase the durability of magnetic disks and tapes.

We have found that magnetic tape formulations which make use of polyurethane show improved durability if a combination of polyisocyanate **and** polyaziridine cross-linking agents are used in the formulation. The improved durability, as demonstrated by time to failure in the Steinberg test, suggests synergism between the two cross-linking agents. While not intending to be bound by any particular theory, we believe that auxiliary reactions occurring between the cross-linking agents make for a tighter three dimensional network and confer on the magnetic medium improved durability against mechanical stress. An auxiliary reaction between isocyanate and aziridine groups could be the formation of a vinyl substituent on the urethane, such as:

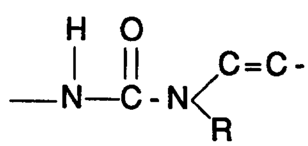

More particularly, in accordance with this invention, there is provided a magnetic recording medium comprising a substrate having disposed thereon a layer of magnetic particles in a binder, said binder comprising polyurethane having carboxyl groups crosslinked with polyisocyanate and polyaziridine. Magnetic media of this composition show improved durability as demonstrated by time to failure in Steinberg tests.

There is also provided a method of making a magnetic recording medium comprising a substrate and a magnetizable layer, comprises the steps of

a) providing the substrate;

b) preparing a dispersion of magnetic particles in a polyurethane binder having carboxyl groups with polyaziridine and polyisocyanate crosslinking agents; and

c) coating the dispersion of b) on to the substrate.

The method is simple and provides an unexpected increase in the durability of the magnetic medium. Further, it is an advantage that the cross-linking agents employed are commercially available.

The description which follows primarily concerns the improved durability of magnetic disks and tapes of material containing polyurethane, but the invention is also useful with other magnetic and non-magnetic organic media provided that they contain carboxyl groups.

The constituents of the coatings are allowed to cross-link and cure by incubation, preferably at 55-60 ° C and with moderate relative humidity. However, the compounds will also cross-link at room temperature albeit over a longer period of time. The rule of thumb is that reaction time increases by a factor of two for every 10 ° C rise in temperature.

Any polyurethane with carboxyl groups is suitable for this invention. Preferably, the weight of the carboxyl groups represents between 0.01 per cent to 20 per cent, but preferably between 5 to 15 per cent of the weight of the polyurethane. Below 1 per cent crosslinking events will be low, yielding less than desired durability, and above 20 per cent there will be excessive crosslinking and the polyurethane will begin to be brittle. Carboxyurethane™ (Goodrich) is an exemplary commercially available polyurethane. Copolymers such as UCARMAG 528™ may be added with the polyurethane to reinforce the soft polyurethane network. These copolymers toughen the crosslinked matrix, provide for lower friction on the coating surface, improve the rate of dispersion of the magnetic particles, and increase adhesion to the substrate. The proportion of copolymer to polyurethane will depend on the degree of toughness desired in the blend and can be determined by one skilled in the art.

Suitable copolymers include VAGF™ (Union Carbide Co.), a copolymer of vinyl chloride, vinyl acetate and vinyl alcohol; UCARMAG 528™ (Union Carbide Co.) which is similar to VAGF™, but with carboxyl groups; vinylchloride-vinylacetate sulfonate; (poly VC/CoVA) sulfate; vinylchloride-vinylacetate phosphate; vinylchloride-vinylacetate copolymer; poly(VC/CO VA); phenoxy resin; modified phenoxy resins; and nitrocellulose.

According to the method of the invention, the polyurethane and copolymers are added to a non-aqueous solvent containing magnetic particles, a lubricant such as myristic acid/butylmyristate (a 50% solution of fatty acid/fatty ester), and a dispersant such as Centrolex P™ (soya lecithin). Other lubricants include butyl stearate, butoxyethyl stearate, tridecyl stearate and other stearate esters, butyl palmitate and other palmitate/stearate pairs, lauric acid, palmitic acid, oleic acid and esters of oleic acid (methyl, ethyl, propyl). Other dispersants include soybean oil (for example, Centrol 3FUB™, Central Soya) other phosphate esters of the Gafac™ (GAF) series.

Various compounds may be used as solvents provided that they do not react with the hardeners. Alcohols are not recommended. Suitable solvents include methylethylketone, tetrahydrofuran, toluene, methylisobutylketone, cyclohexanone and xylene, alone or combined in proportions known in the art. Most preferred is a solvent blend of 51% tetrahydrofuran, 46% cyclohexanone, and 3% toluene (w/w of the solvent blend).

Useful magnetic particles include gamma ferric-cobaltic oxide, gamma ferric oxide, barium ferrite, chromium trioxide and iron.

All of the above constituents are stirred at room temperature for 20 minutes after which an abrasive (for example, aluminum oxide) and a conductive material (for example, carbon) are added. The abrasive and the conductive material are predispersed in the polyurethane and/or copolymer before addition to the premix. The predispersion is generally accomplished by milling in a one gallon ball mill for several days to a specific particle size. Suitable abrasives include alpha aluminum oxide, alpha ferric oxide, silicon dioxide, titanium dioxide and chromium dioxide.

The constituents are again stirred for another 20 minutes and then passed through a small media mill until the formulation is microscopically smooth. The smoothness is determined by hand coating a fineness of grind gauge and examining the base of the gauge (where the finest particles should be) at 100x to determine the particle size. Desired size is dependent on the application, but would be less than 10 microns for practical magnetic applications. Additional polyurethane, copolymer and solvent are added with stirring. Next, the formulation is polished for 1 hour in a small media mill. Polishing is a second milling step, usually with smaller grinding media than the first milling step, to assist in the incorporation of polymers and solvents. Polishing is believed to reduce and/or eliminate flocculation that may occur when the milling solids

are drastically reduced. Many magnetic formulations are milled at 50% or greater (solids wt) and coated at 20% to 35%. A drop of this magnitude may cause flocculation or clumping. Polishing is often seen as one way to ensure that the quality of the dispersion is maintained for the coating.

Immediately prior to coating the formulation on the substrate, a catalyst and the crosslinking agents, polyisocyanate and polyaziridine, are added with stirring. Useful catalysts include ferric acetyl acetonate, other metal acetylacetonates (Pb, Mn, Sn), dibutyl tin dilaurate and other tin organic esters, triethylene diamine and other poly amines. The weight ratio of the polyurethane to the total weight of the crosslinking agents, (that is polyisocyanate plus polyaziridine) is between 7:2 and 12:2, but preferably 10:2. Similarly, the weight ratio of polyisocyanate to polyaziridine may be between 10:90 and 90:10, but preferably 1:1.

Widely used polyisocyanate hardening agents are commercially available under the tradename Mondur™ from Mobay and contain three isocyanate groups per molecule. The polyisocyanate used in the examples are aromatic, but aliphatic based material may also be used in the invention. The polyisocyanate employed may be essentially any organic isocyanate having the general formula -(NCO)-. Representative compounds include Mondur CB75™ (Mobay, aromatic tri-isocyanate) and Desmodur N™ (Mobay, aliphatic tri-isocyanate).

The polyaziridines used in the examples are aliphatic but similar compounds containing aromatic groups should be effective. Commonly available polyaziridines useful in the practice of this invention include Xama-7™ and are of the general formula:

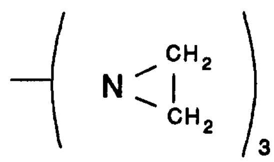

More particularly, the magnetic recording medium of the invention can be provided by the method described above using the constituents in the quantities and proportions given below. The formulation is further described in Example 3 below.

*Material Description:*

| | |
|---|---|
| Xama-7™ | Trimethylpropane-tris-(β-(N-aziridinyl) Propionate (Hoecht Celanese) |

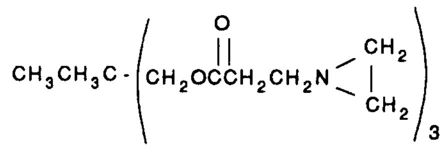

| | |
|---|---|
| Mondur CB75™ (Mobay) | Aromatic polyisocyanate based on toluene diisocyanate dissolved in ethyl acetate |
| Mondur CB701™ | Same as CB75 but dissolved in tetrahydrofuran |
| CA 139™ (Morton) | Polyurethane |
| VAGF™ (Union Carbide Co.) | Copolymer of vinyl chloride, vinyl acetate, vinyl acetate and vinyl alcohol |
| Carboxyurethane™ (Goodrich) | Polyurethane containing carboxyl groups |
| UCARMAG 528™ (Union Carbide Company) | Like VAGF but containing carboxyl groups |
| Centrolex P™ | Soya lecithin dispersing agent |
| Ferric AcAc (Eastman Kodak Company) | Ferric acetyl acetonate |

<u>Preparation of Formulation for Magnetic Media</u>

| Ingredients in addition order | gram weight |
|---|---|
| solvent blend * | 53.864 |
| 50% Myristic Acid/Butyl Myristate (THF) | 0.167 |
| 25% Centrolex P™ (cyclo/toluene 1:1) | 0.668 |
| Mapex 1100B™ (Iron particle) | 16.698 |
| 15% Carboxyurethane solution (cyclo) | 11.273 |
| 15% Ucarmag 527™ (cyclo) | 3.433 |

Stir 20 minutes. Then add abrasive and carbon pregrinds (below):

| | |
|---|---|
| AKP-30™ (alpha $Al_2O_3$) | 1.169 |
| Gafac RE-610™ (phosphate ester) | 0.023 |
| 15% CA139™ (THF) | 0.233 |

| | |
|---|---|
| XC72R™ (carbon) | 1.169 |
| 15% VAGF™ (vinylchloride-vinylacetate in Cyclohexanone) | 0.199 |

Stir 20 minutes. Pass through small media mill until microscopically smooth. Then add with stirring:

| | |
|---|---|
| 15% carboxyurethane (cyclo) | 10.393 |
| 15% Ucarmag 528™ (cyclo) | 5.860 |
| Tetrahydrofuran | 6.310 |
| Cyclohexanone | 0.540 |
| Toluene | 0.670 |

Polish 1 hour in small media mill. Immediately prior to coating, add, with stirring:

| | |
|---|---|
| 5% Ferric Acetylacetonate (THF) | 0.500 |
| Mondur CB75™ reduced to 50% solids (THF) | 1.3 |
| Xama-7™ (polyaziridynl) | 1.3 |

*Solvent blend (weight percent):

51% Tetrahydrofuran
46% Cyclohexanone
3% Toluene

The following examples further illustrate the invention.

Example 1 *Reaction between polyaziridine and polyisocyanate*

We mixed 10 gms of 33% Mondur 701™ with 1 gm of Xama-7™ (tetrahydrofuran as the solvent). A firm gel formed within 2 days indicating a strong reaction at room temperature between the aziridine and the isocyanate groups.

Example 2 *Cross-linking of urethane containing material with polyaziridine and with polyisocyanate*

We mixed 100 gram of UCARMAG 528™ (10% in cyclohexanone) with the following:

a) 1 gm of Xama-7™ (dry basis)
b) 2 gms of Mondur 701™ (dry basis)
c) 0.5 gm Xama-7™ and 1.0 gm Mondur 701™

Since Xama-7™ has 6.5 milliequivalents of aziridine groups per gm and the Mondur™ contains approximately half of that on the basis of isocyanate groups, the use of the amounts listed in a), b) and c) above puts each experiment on an equivalent (50:50 percent) basis with regard to the concentration of cross-linking groups. A 1:1 ratio of isocyanate: aziridine groups is preferred, but ratios of about 10:90 to about 90:10 are also useful. The gelation times are listed below.

| | |
|---|---|
| a) Xama-7™ alone<br>b) Mondur™ alone<br>c) Mixed, Xama™ and Mondur™ | 7 days<br>1 day<br>8 hours |

The gelation times give an indication of the synergism observed by using Xama™ and Mondur™ with a carboxyl containing polymer. It is reasonable to assume that the gelation observations carry over when this preparation is applied to coatings.

Example 3 *Magnetic tape formulation*

Three formulations were prepared having dry compositions as follows:

| Component | Coating A % | Coating B Wt % | Coating C Wt. % |
|---|---|---|---|
| Iron Particle | 66.48 | 66.48 | 66.48 |
| Carbon | 4.65 | 4.65 | 4.65 |
| Abrasive | 4.65 | 4.65 | 4.65 |
| CA 139™ | 4.65 | 4.65 | 4.65 |
| VAGF™ | 0.14 | 0.14 | 0.14 |
| Carboxyurethane™ | 12.94 | 12.94 | 12.94 |
| UCARMAG 528™ | 5.55 | 5.55 | 5.55 |
| Centrolex P™ | 0.75 | 0.75 | 0.75 |
| myristic acid/butylmyristate 1:1 | 1.33 | 1.33 | 1.33 |
| Ferric AcAc | 1.1 | 0.10 | 0.10 |
| Mondur CB75™ | 0.00 | 2.60 | 1.30 |
| Xama-7™ | 2.60 | 0.00 | 1.30 |
| A, B and C were milled and coated at 100μ on a polyester (Mylar™, Dupont) substrate. They were then calendered and cured at 55° C for three days. | | | |

*Magnetic tape, durability tests*

The wear characteristics of the three samples described in Example 3 were compared by testing the three samples for time to failure using a Steinberg Durability Test Stand. This test is a method of measuring temperature rise caused by friction between a stationary tape surface (held at constant tension) and a magnetic head rotating at a constant velocity. The operating premise is that a rapid temperature rise is a precursor to failure. Testing requires two 15" x 1/2" strips of coated material. The Steinberg tester consists of a drum with a rotating head and measures the frictional heat generated with each pass. When the temperature reaches the maximum, or 70 minutes have passed, the test is complete. This type of test is generally used to screen products under development. The basic advantage of the Steinberg tester is that it removes the transport and tension problems associated with a tape drive system.

After exposure to the rotating magnetic head, the test strip can be examined for wear tracks; the magnetic head on the equipment can also be observed for any deposit left on the head. In the results below, failure is defined as the removal of the coating layer on the wear track. The results were:

| Coating | Time to Failure (Minutes) |
|---|---|
| Isocyanate Alone (A) | 32.3 |
| Aziridine Alone (B) | 15.0 |
| Combination A and B (1:1)(C) | 67.8 |

## Claims

1. A magnetic recording medium comprising a substrate having disposed thereon a layer of magnetic particles in a binder, characterized in that the binder comprises polyurethane having carboxyl groups crosslinked with polyisocyanate and polyaziridine.

2. The magnetic recording medium of claim 1 wherein the weight of the carboxyl groups represents between 0.01 to 20 per cent of the weight of the polyurethane.

3. The magnetic recording medium of claim 2 wherein the weight of the carboxyl groups represents between 5 to 15 per cent of the weight of the polyurethane.

4. The magnetic recording medium of any one of the preceding claims wherein the polyurethane is a poly(carboxyurethane).

5. The magnetic recording medium of any one of the preceding claims wherein the polyaziridine is a poly-(trimethylpropane-tris-)($\beta$-(N-aziridinyl) propionate.

6. The magnetic recording medium of any one of the preceding claims wherein the polyisocyanate is an aromatic polyisocyanate.

7. The magnetic recording medium of any one of the preceding claims coated on a polyester substrate.

8. The magnetic recording medium of any one of the preceding claims wherein the ratio of polyisocyanate to polyaziridine is between 10:90 and 90:10.

9. The magnetic recording medium of any one of the preceding claims wherein the ratio of polyisocyanate to polyaziridine is 1:1.

10. The magnetic recording medium of any one of the preceding claims wherein the ratio of polyurethane to polyisocyanate to polyaziridine is 10:1:1.

11. The magnetic recording medium of any one of claims 1 to 9 wherein the ratio of polyurethane to combined polyisocyanate and polyaziridine is between 7:2 and 12:2.

12. A method of making a magnetic recording medium comprising a substrate and a magnetizable layer, characterized in that the method comprises the steps of
    a) providing the substrate;
    b) preparing a dispersion of magnetic particles in a polyurethane binder having carboxyl groups crosslinked with polyaziridine and polyisocyanate; and
    c) coating the dispersion of b) on to the substrate.

European Patent Office

# EUROPEAN SEARCH REPORT

Application Number

EP 92 20 3922

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 490 505 (DANIEL B. PENDERGRASS) 25 December 1984<br>* column 2, line 58 - column 31 *<br>* column 3, line 36 - column 4, line 14 *<br>* column 5, line 61 - column 6, line 15 *<br>* column 6, line 48 - line 57 *<br>* claims 1,13-15 *<br>--- | 1-4,12 | G11B5/702 |
| A | US-A-4 454 282 (RICHARD L. BRADSHAW) 12 June 1984<br>* column 6, line 32 - line 55 *<br>* claims 1-11 *<br>----- | 1-4,12 | |
| | | | TECHNICAL FIELDS SEARCHED (Int. Cl.5 ) |
| | | | G11B |

The present search report has been drawn up for all claims

| Place of search | Date of completion of the search | Examiner |
|---|---|---|
| THE HAGUE | 21 APRIL 1993 | KLOCKE S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document